# EUROPÄISCHE PATENTSCHRIFT

(11) **EP 2 447 613 B1**
(45) Veröffentlichungstag und Bekanntmachung des Hinweises auf die Patenterteilung: **06.05.2020**
(21) Anmeldenummer: 11186676.0
(22) Anmeldetag: 26.10.2011
(51) Int. Cl.: F24D 19/10

(54) **Verfahren zum Regeln einer Wärmepumpenanlage**
Method for regulating a heat pump assembly
Procédé de réglage d'une installation de pompe à chaleur

(30) Priorität: 29.10.2010 DE 102010050057
(43) Veröffentlichungstag der Anmeldung: 02.05.2012
(73) Patentinhaber: Robert Bosch GmbH, 70442 Stuttgart (DE)
(72) Erfinder: Geibel, Tobias, 35578 Wetzlar (DE)

(56) Entgegenhaltungen:
- EP-A2- 0 100 210
- WO-A1-2007/027173
- WO-A1-2010/122759
- JP-A- 2001 296 049
- JP-A- 2007 278 618
- US-A- 4 432 232
- US-A1- 2006 032 245

## Beschreibung

Die Erfindung betrifft ein Verfahren zum Regeln einer Wärmepumpenanlage nach dem Oberbegriff des Patentanspruches 1. Ein solches Verfahren ist aus Dokument EP 0 100 210 A2 bekannt.

Wärmepumpen sind Maschinen, die unter Zufuhr von technischer Arbeit Wärme von einem niedrigeren zu einem höheren Temperaturniveau überführen. Bei Wärmepumpenheizungen wird die auf dem hohen Temperaturniveau anfallende Verflüssigungswärme zum Beheizen von Räumen oder Trinkwasser genutzt. Elektromotorisch angetriebene Kompressions-Wärmepumpen stellen den Hauptanwendungsfall von Wärmepumpen dar. Der Wärmepumpenprozess ist ein thermodynamischer Kreisprozess, wobei ein Kältemittel in einem geschlossenen Kreislauf geführt wird. Das Kältemittel wird von einem Verdichter angesaugt, verdichtet und einem Verflüssiger (Kondensator) zugeführt. Der Verflüssiger ist ein Wärmeübertrager, in dem die bei der Verflüssigung anfallende Wärme an ein Fluid - zum Beispiel an einen Heizungswasserkreis oder an die Raumluft - abgegeben wird. Das dabei sich verflüssigende Kältemittel wird dann zu einer Entspannungseinrichtung, insbesondere ein Kapillarrohr oder thermisches Expansionsventil, geführt. Durch die Entspannung kühlt das Kältemittel ab. In einem nachgeschalteten Verdampfer wird Wärme von einer auf einem niedrigen Temperaturniveau befindlichen Wärmequelle an das Kältemittel übertragen und führt zum Verdampfen des Kältemittels. Das verdampfte Kältemittel wird dann wieder von dem Verdichter angesaugt. Eine Regeleinrichtung steuert die Wärmepumpenanlage sowie mindestens einem angeschlossenen Heiz- und/oder Kühlkreislauf, indem sie auf das Verhalten der Komponenten einwirkt, dieses auswertet und erfasst. Als Wärmequelle für Wärmepumpenanlagen kann die Umgebungsluft oder ein Solekreis genutzt werden, der die Wärme aus dem Erdreich oder natürlichen Wasservorkommen aufnimmt.

Leistungszahl und Jahresarbeitszahl sind die wichtigsten Wärmepumpen-Kennzahlen. Dabei gibt die Leistungszahl das Verhältnis zwischen der Wärmeleistung, die an den angeschlossenen Heiz- und/oder Kühlkreislauf abgegeben wird, und der aufgenommenen elektrischen Leistung der Wärmepumpe an. Die Leistungszahl gilt jedoch nur für einen bestimmten Betriebspunkt, denn sie ändert sich permanent je nach Quellen- und Heizungsvorlauftemperatur. Elektro-Wärmepumpen neuerer Bauart erzielen - je nach Wärmequelle - Leistungszahlen zwischen 3,5 und 5,5. Dies bedeutet, dass pro eingesetzter Kilowattstunde Strom 3,5 bis 5,5 Kilowattstunden Heizwärme erzeugt werden. Die Leistungszahl lässt allerdings die Leistung elektrischer Hilfsaggregate, die nicht unmittelbar zum Wärmepumpen-Prozess gehören, unberücksichtigt. Dazu gehören beispielsweise Umwälzungspumpen im Heiz- und/oder Kühlkreislauf und Grundwasser-Förderpumpen.

Der sogenannte COP-Wert dagegen gibt auch die Leistungen von Hilfsaggregaten, die Abtau-Energie und die anteilige Pumpenleistung für Heizungs-, Sole- und Grundwasser-Förderpumpen wieder. Damit ist der COP-Wert ein Gütekriterium für Wärmepumpen und Prüfinstitute ermitteln diesen Wert nach einer definierten Messmethode, nämlich der DIN EN 255. Leistungszahl und COP-Wert erlauben allerdings keine energetische Bewertung der Gesamtanlage.

Für eine solche Bewertung ist die sogenannte Jahresarbeitszahl entscheidend, welche somit die wichtigere Wärmepumpen-Kennzahl für den Wirkungsgrad ist. Sie bezeichnet über ein Jahr hinweg das Verhältnis zwischen abgegebener Wärmemenge und zugeführter Energie in Form von Antriebsenergie. Wie der COP-Wert enthält auch die Jahresarbeitszahl anteilig die Leistungen von Umwälzpumpen im Heiz- und/oder Kühlkreislauf, im Grundwasser und von Sole-Förderpumpen. Die Jahresarbeitszahl wird somit auch als Anlagennutzungsgrad bezeichnet. Sie eignet sich damit gut zur energetischen Bewertung der Gesamtanlage. In der Praxis erreichen zum Beispiel Luft-/Wasser-Wärmepumpen Werte im bereich von 2 bis 4, wobei moderne Luft-/Wasser-Wärmepumpen die Jahresarbeitszahl von 3,5 übertreffen sollten. Auch für die Förderung bzw. Bezuschussung von Investitionen in Wärmepumpenanlagen durch öffentliche Finanzmittel ist die Jahresarbeitszahl von Bedeutung, weil beim Erwerb und teilweise auch im Betrieb das Erreichen der entsprechenden Jahresarbeitszahl nachzuweisen ist.

Zur Messung und Bewertung der Effizienz einer Wärmepumpenanlage über eine sogenannte Jahresarbeitszahl sind feste Betriebspunkte vorgesehen, welche jeweils auf eine vorbestimmte Wertekombination, besser ein Wertepaar, aus einer Wärmequellentemperatur und einer zugeordneten Vorlauftemperatur des angeschlossenen Heiz- und/oder Kühlkreislaufes bezogen sind.

Beispielsweise liegen diese Betriebspunkte, jeweils immer bezogen auf 35°C Vorlauftemperatur im angeschlossenen Heiz- und/oder Kühlkreislauf, für eine Luft-/Wasser-Wärmepumpe bei 2°C Wärmequellentemperatur, also Außenlufttemperatur, bei Sole-/ Wasser-Wärmepumpen bei 0° Soletemperatur und bei Wasser-/Wasser-Wärmepumpen bei einer Wärmequellentemperatur von 10°C.

Die Aufgabe der vorliegenden Erfindung ist es, eine Wärmepumpenanlage energetisch möglichst effektiv mit einer optimalen Jahresarbeitszahl zu betreiben und dem Betreiber einen guten Überblick über die Effizienz der Wärmepumpenanlage zu verschaffen.

Erfindungsgemäß wird dies mit den Merkmalen des Patentanspruches 1 gelöst. Vorteilhafte Weiterbildungen sind den Unteransprüchen zu entnehmen.

Das erfindungsgemäße Verfahren zum Regeln einer Wärmepumpenanlage beinhaltet, dass eine aktuelle Jahresarbeitszahl und/oder ein aktueller, COP-Wert aus den aktuell vorliegenden Messwerten und/oder bereits in zurückliegenden Zeiträumen erfassten Betriebswerten ermittelt und angezeigt wird.

Daher werden zur Ermittlung einer Jahresarbeitszahl und/oder des COP-Wertes Messungen in vorgebbaren Betriebspunkten, welche jeweils auf eine vorbestimmte Wertekombination aus Wärmequellentemperatur und Vorlauftemperatur des angeschlossenen Heiz- und/oder Kühlkreislaufes bezogen sind, gemacht. Weiterhin wird die Jahresarbeitszahl und/oder der COP-Wert aus den Ergebnissen dieser einzelnen Messungen, entweder aktuell und/oder aus bereits zurückliegenden Zeiträumen, laufend ermittelt.

In einer bevorzugten Ausführungsform der Erfindung werden zur Ermittlung einer Jahresarbeitszahl und/oder des COP-Wertes die Messungen in vorgebbaren Betriebspunkten dann gemacht, wenn die Wärmequellentemperatur im aktuellen Betriebszustand den vorbestimmten Wert aufweist. In dieser Situation wird zur Durchführung einer Messung bei einer Wärmequellentemperatur im aktuellen Betriebszustand auf einem passenden, vorbestimmten Wert die Regeleinrichtung mindestens für eine kurze, vorgebbare Zeitdauer aktiv. Sie passt die Vorlauftemperatur des angeschlossenen Heiz- und/oder Kühlkreislaufes auf einen der Wertekombination entsprechenden vorbestimmten Sollwert für die Vorlauftemperatur an und führt diesen nach Abschluss der Messung wieder auf eine zum aktuellen Betriebszustand passende Vorlauftemperatur zurück.

In einer weiteren bevorzugten Ausführungsform ist bei einer Messung zur Ermittlung der Jahresarbeitszahl und/oder des COP-Wertes in vorgebbaren Betriebspunkten die Zeitdauer für das Anpassen der Vorlauftemperatur des angeschlossenen Heiz- und/oder Kühlkreislaufes zur Durchführung einer Messung vorgebbar und/oder wird aus aktuellen Betriebswerten automatisch bestimmt. Vorzugsweise ist der Zeitabstand zwischen der letzten Messung zur Ermittlung der Jahresarbeitszahl in einem Betriebspunkt vorgebbar.

Vorteilhafterweise wird die Wärmequellentemperatur direkt oder indirekt gemessen. Dabei sind zur indirekten Messung aktuelle Betriebszustände über Drucksensoren im Kältekreislauf erfassbar. Diese Druckwerte liegen zur Überwachung und Regelung des Kältekreises in der Regeleinrichtung ohnehin vor und lassen sehr genaue Rückschlüsse auf die Wärmequellentemperatur zu.

In einer weiteren Ausführungsform der Erfindung ist eine Soll-Jahresarbeitszahl und/oder ein Soll-COP-Wert vorgebbar, nach der bzw. dem die Regeleinrichtung die Parameter der Wärmepumpenanlage so optimiert, dass diese mit dem Betrieb der Wärmepumpenanlage in einem vorgebbaren Zeitraum erreicht wird. Dies kann beispielsweise durch eine Absenkung der Vorlauftemperatur für den angeschlossenen Heiz- und/oder Kühlkreislauf erfolgen. Jedenfalls startet die Regeleinrichtung die Optimierung zum Erreichen der Soll-Jahresarbeitszahl und/oder des Soll-COP-Wertes mit werkseitig und/oder bei der Installation vorgegebenen Parametern und verändert diese durch Vergleich mit aktuell gemessenen Betriebswerten oder auch mit Werten aus einem Historienspeicher. Grenzen für die Optimierung bilden beispielsweise sicherheits- und/oder komfortrelevante Parameter.

So ermittelt die Regeleinrichtung die Anteile der werkseitig und/oder bei der Installation vorgegebenen Parameter im Vergleich zu den auf Basis zu gemessenen Betriebswerten veränderten Parametern. Nach Auswertung dieser Anteile wird vorzugsweise der Anteil der auf aktuellen Messwerten basierenden Parameter angezeigt. Daraus kann man erkennen, welchen Grad die Optimierung und somit die Berücksichtigung von anlagenspezifischen Istwerten für die Messungen bzw. den Anlagenbetrieb erreicht hat.

Vorzugsweise wird bei manueller Veränderung von Parametern oder auch kontinuierlich eine Jahresarbeitszahl- und COP-Wert-Prognose aus den aktuell vorliegenden Messwerten und/oder bereits in zurückliegenden Zeiträumen erfassten Betriebswerten ermittelt und angezeigt. Dabei erfolgt die Jahresarbeitszahl- und COP-Wert-Prognose und -Anzeige vorzugsweise mit einer Qualitätsbewertung - in Bezug auf das Über- oder Unterschreiten der Soll-Jahresarbeitszahl und/oder des Soll-COP-Wertes - und/oder auf den Betrag des Über- oder Unterschreitens. Dabei wird das Erreichen, Überschreiten und/oder Unterschreiten einer Soll-Jahresarbeitszahl und/oder eines Soll-COP-Wertes ermittelt und angezeigt. Zum Beispiel kann ein positiv wirkendes grafisches Symbol das Erreichen und ein negativ wirkendes Symbol oder ein anderer Hinweis das Unterschreiten der Soll-Jahresarbeitszahl und/oder eines Soll-COP-Wertes signalisieren.

In einer weiteren Ausgestaltung der Erfindung werden Wartungshinweise ausgegeben, wenn durch die Messungen zur Ermittlung der Jahresarbeitszahl und/oder des COP-Wertes in vorgebbaren Betriebspunkten Optimierungsbedarf in der Regeleinrichtung oder an Komponenten erkannt wird. Einerseits sind damit Einstellhinweise an den Betreiber der Wärmepumpenanlage gemeint, andererseits aber auch an eingewiesenes Wartungs- und Servicepersonal, eventuell auch auf einer anderen, für den Endkunden nicht direkt einsehbaren Bedienebene. Letzteres betrifft dann speziell erforderliche Eingriffe oder auch erkannte Optimierungen durch spezielle Einstellungen an Komponenten. Natürlich werden auf diese Weise auch Mängel oder Defekte an Komponenten der Wärmepumpenanlage schneller erkannt.

Mit dem erfindungsgemäßen Verfahren wird eine Wärmepumpenanlage energetisch möglichst effektiv mit einer optimalen Jahresarbeitszahl und/oder einem optimalen COP-Wert betrieben. Gleichzeitig erhält ein Betreiber oder Nutzer einen guten Überblick über die Effizienz der Wärmepumpenanlage. Gerade bei derartigen Anlagen für Heiz- und/oder Kühlzwecke, welche meist einen relativ hohen Planungsaufwand und natürlich auch entsprechend hohe Investitionen bedeuten, bringt das erfindungsgemäße Regelverfahren im Vergleich zum Stand der Technik mehr Sicherheit durch eine bessere Funktionskontrolle für Installateure und Anlagenbetreiber. Viele relativ komplexe und miteinander verknüpfte Einzeleinstellungen, in der Regel sogar auch nur betriebswichtige Hintergrundfunktionen, werden somit über die erfindungsgemäße Darstellung der Jahresarbeitszahl und/oder des COP-Wertes an der Bedien-Schnittstelle der Regeleinrichtung einer Wärmepumpenanlage anschaulich angezeigt.

Außerdem wird mit dem erfindungsgemäßen Regelungs- und Überwachungsverfahren nicht nur der Betrieb optimiert, sondern es werden auch Mängel oder Defekte an Komponenten der Wärmepumpenanlage schneller erkannt.

## Patentansprüche

1. Verfahren zum Regeln einer Wärmepumpenanlage, zum Heizen und/oder Kühlen zur Verwertung von Wärme aus der Umgebungsluft, Erdreich oder Wasser als Wärmequelle, umfassend eine Kompressionswärmepumpe mit mindestens einem Verdichter, einem Verflüssiger, einer Entspannungseinrichtung, einem Verdampfer, mindestens einem geschlossenen Rohrleitungskreislauf zur Verbindung der vorgenannten Komponenten, einem durch den Rohrleitungskreislauf und die vorgenannten Komponenten zirkulierenden Kältemittel, einer Regeleinrichtung zur Steuerung und Überwachung der Wärmepumpenanlage sowie mindestens einem angeschlossenen Heiz- und/oder Kühlkreislauf,
**dadurch gekennzeichnet, dass**
zur Messung und Bewertung einer Effizienz der Wärmepumpenanlage über eine sogenannte Jahresarbeitszahl vorgegebene Betriebspunkte vorgesehen sind, welche jeweils auf eine vorbestimmte Wertekombination aus Wärmequellentemperatur und Vorlauftemperatur des angeschlossenen Heiz- und/oder Kühlkreislaufes bezogen sind,
wobei zur Ermittlung der Jahresarbeitszahl der Wärmepumpenanlage und/oder eines COP-Werts der Wärmepumpenanlage Messungen in den Betriebspunkten gemacht werden,
wobei die Jahresarbeitszahl und/oder der COP-Wert aus den Ergebnissen dieser einzelnen Messungen, entweder aktuell und/oder aus bereits zurückliegenden Zeiträumen, laufend ermittelt und angezeigt wird.

2. Verfahren nach Anspruch 1,
**dadurch gekennzeichnet, dass** zur Ermittlung der Jahresarbeitszahl und/oder des COP-Wertes Messungen in vorgebbaren Betriebspunkten, welche jeweils auf eine vorbestimmte Wertekombination aus Wärmequellentemperatur und Vorlauftemperatur des angeschlossenen Heiz- und/oder Kühlkreislaufes bezogen sind, gemacht werden, wenn die Wärmequellentemperatur im aktuellen Betriebszustand den vorbestimmten Wert aufweist.

3. Verfahren nach einem der Ansprüche 1 bis 2,
**dadurch gekennzeichnet, dass** zur Durchführung der Messung bei einer Wärmequellentemperatur im aktuellen Betriebszustand auf einem passenden, vorbestimmten Wert die Regeleinrichtung mindestens für einen kurze, vorgebbare Zeitdauer auch die Vorlauftemperatur des angeschlossenen Heiz- und/oder Kühlkreislaufes auf einen der Wertekombination entsprechenden vorbestimmten Sollwert für die Vorlauftemperatur anpasst und nach Abschluss der Messung wieder auf eine zum aktuellen Betriebszustand passende Vorlauftemperatur zurück führt.

4. Verfahren nach einem der Ansprüche 1 bis 3,
**dadurch gekennzeichnet, dass** bei der Messung zur Ermittlung der Jahresarbeitszahl und/oder des COP-Wertes in vorgebbaren Betriebspunkten die Zeitdauer für das Anpassen der Vorlauftemperatur des angeschlossenen Heiz- und/oder Kühlkreislaufes zur Durchführung der Messung vorgebbar ist und/oder aus aktuellen Betriebswerten automatisch bestimmt wird.

5. Verfahren nach einem der Ansprüche 1 bis 4,
**dadurch gekennzeichnet, dass** der Zeitabstand zwischen der letzten Messung zur Ermittlung der Jahresarbeitszahl und/oder des COP-Wertes in einem Betriebspunkt vorgebbar ist.

6. Verfahren nach einem der Ansprüche 1 bis 5,
**dadurch gekennzeichnet, dass** die Wärmequellentemperatur direkt oder indirekt gemessen wird, wobei zur indirekten Messung aktuelle Betriebszustände über Drucksensoren im Kältekreislauf erfassbar sind.

7. Verfahren nach einem der Ansprüche 1 bis 6,
**dadurch gekennzeichnet, dass** eine Soll-Jahresarbeitszahl und/oder ein Soll-COP-Wert vorgebbar ist und dass die Regeleinrichtung die Parameter der Wärmepumpenanlage so optimiert, dass diese mit dem Betrieb der Wärmepumpenanlage in einem vorgebbaren Zeitraum erreicht wird.

8. Verfahren nach Anspruch 7,
**dadurch gekennzeichnet, dass** die Regeleinrichtung die Optimierung zum Erreichen der Soll-Jahresarbeitszahl und/oder des Soll-COP-Wertes mit werksseitig und/oder bei der Installation vorgegebenen Parametern startet und diese durch Vergleich mit aktuell gemessenen Betriebswerten verändert.

9. Verfahren nach einem der Ansprüche 1 bis 8,
**dadurch gekennzeichnet, dass** die Regeleinrichtung die Anteile der werkseitig und/oder bei der Installation vorgegebenen Parametern im Vergleich zu den auf Basis zu gemessenen Betriebswerten veränderten Parametern ermittelt, auswertet und als Anteil der auf aktuellen Messwerten basierenden Parameter anzeigt.

10. Verfahren nach einem der Ansprüche 1 bis 9,
**dadurch gekennzeichnet, dass** bei Veränderung von Parametern eine Jahresarbeitszahl- und/oder COP-Wert-Prognose aus den aktuell vorliegenden Messwerten und/oder bereits in zurückliegenden Zeiträumen erfassten Betriebswerten ermittelt und angezeigt wird.

11. Verfahren nach einem der Ansprüche 8 bis 10,
**dadurch gekennzeichnet, dass** die Jahresarbeitszahl- und/oder COP-Wert-Prognose mit einer Qualitätsbewertung in Bezug auf das Über- oder Unterschreiten der Soll-Jahresarbeitszahl und/oder des Soll-COP-Wertes auf den Betrag des Über- oder Unterschreitens angezeigt wird.

12. Verfahren nach einem der Ansprüche 8 bis 11,
**dadurch gekennzeichnet, dass** das Erreichen, Überschreiten und/oder Unterschreiten einer Soll-Jahresarbeitszahl und/oder des Soll-COP-Wertes ermittelt und angezeigt wird.

13. Verfahren nach einem der Ansprüche 1 bis 12,
**dadurch gekennzeichnet, dass** Wartungshinweise ausgegeben werden, wenn durch die Messungen zur Ermittlung der Jahresarbeitszahl und/oder des COP-Wertes in vorgebbaren Betriebspunkten Optimierungsbedarf an Komponenten erkannt wird.

## Claims

1. Method for the closed-loop control of a heat pump installation, for heating and/or cooling for the purposes of utilizing heat from the ambient air, ground or water as a heat source, comprising a compression heat pump with at least one compressor, with a liquefier, with an expansion device, with an evaporator, with at least one closed pipeline circuit for connecting the above-stated components, with a refrigerant which circulates through the pipeline circuit and the above-stated components, with a closed-loop control device for the control and monitoring of the heat pump installation, and with at least one connected heating and/or cooling circuit,
**characterized in that**,
for the measurement and evaluation of an efficiency of the heat pump installation by means of a so-called annual performance factor, predefined operating points are provided which relate in each case to a predetermined value combination of heat source temperature and feed temperature of the connected heating and/or cooling circuit, wherein, for the determination of the annual performance factor of the heat pump installation and/or of a COP value of the heat pump installation, measurements are performed at the operating points, wherein the annual performance factor and/or the COP value are continuously determined, either currently and/or from time periods that already lie in the past, from the results of said individual measurements and are displayed.

2. Method according to Claim 1,
**characterized in that**, for the determination of the annual performance factor and/or of the COP value, measurements are performed at predefinable operating points which relate in each case to a predetermined value combination of heat source temperature and feed temperature of the connected heating and/or cooling circuit, if the heat source temperature has the predetermined value in the present operating state.

3. Method according to either of Claims 1 and 2,
**characterized in that**, for the execution of the measurement in the case of a heat source temperature at a suitable predetermined value in the present operating state, the closed-loop control device, at least for a short predefinable time period, also adapts the feed temperature of the connected heating and/or cooling circuit to a predetermined setpoint value, corresponding to the value combination, for the feed temperature, and after the measurement has been completed, said closed-loop control device returns said feed temperature again to a feed temperature which is suitable for the present operating state.

4. Method according to any of Claims 1 to 3,
**characterized in that**, in the measurement for the determination of the annual performance factor and/or of the COP value at predefinable operating points, the time period for the adaptation of the feed temperature of the connected heating and/or cooling circuit for the execution of the measurement is predefinable and/or is automatically ascertained from present operating values.

5. Method according to any of Claims 1 to 4,
**characterized in that** the time interval between the most recent measurement for the determination of the annual performance factor and/or of the COP value at an operating point is predefinable.

6. Method according to any of Claims 1 to 5,
**characterized in that** the heat source temperature is measured directly or indirectly, wherein, for the indirect measurement, present operating states can be detected by means of pressure sensors in the refrigeration circuit.

7. Method according to any of Claims 1 to 6,
**characterized in that** a setpoint annual performance factor and/or a setpoint COP value is predefinable, and **in that** the closed-loop control device optimizes the parameters of the heat pump installation such that this is attained in a predefinable time period with the operation of the heat pump installation.

8. Method according to Claim 7,
**characterized in that** the closed-loop control device starts the optimization for attaining the setpoint annual performance factor and/or the setpoint COP value using parameters predefined at the factory and/or during installation, and varies said parameters by comparison with presently measured operating values.

9. Method according to any of Claims 1 to 8,
**characterized in that** the closed-loop control device determines and evaluates the proportion of the parameters predefined at the factory and/or during installation in relation to the parameters changed on the basis of measured operating values, and displays these as a proportion of the parameters based on present measured values.

10. Method according to any of Claims 1 to 9,
**characterized in that**, in the event of a variation of parameters, an annual performance factor and/or COP value prediction is determined from the currently present measured values and/or operating values detected already in time periods lying in the past, and is displayed.

11. Method according to any of Claims 8 to 10,
**characterized in that** the annual performance factor and/or COP value prediction is displayed with a quality evaluation, with regard to the overshooting or undershooting of the setpoint annual performance factor and/or of the setpoint COP value, based on the magnitude of the overshooting or undershooting.

12. Method according to any of Claims 8 to 11,
**characterized in that** the attainment, overshooting and/or undershooting of a setpoint annual performance factor and/or of the setpoint COP value is determined and displayed.

13. Method according to any of Claims 1 to 12,
**characterized in that** maintenance instructions are output if a need for optimization of components is identified from the measurements for the determination of the annual performance factor and/or of the COP value at predefinable operating points.

## Revendications

1. Procédé de régulation d'une installation de pompe à chaleur, pour le chauffage et/ou le refroidissement pour l'utilisation de chaleur provenant de l'air ambiant, du sol ou de l'eau comme source de chaleur, comportant une pompe à chaleur à compression comportant au moins un compresseur, un condenseur, un dispositif de détente, un évaporateur, au moins un circuit fermé de conduites tubulaires servant à la liaison desdits composants, un réfrigérant circulant à travers le circuit de conduites tubulaires et lesdits composants, un dispositif de régulation servant à la commande et à la surveillance de l'installation de pompe à chaleur ainsi qu'au moins un circuit de chauffage et/ou de refroidissement raccordé,
**caractérisé en ce que**
pour la mesure et l'évaluation d'une efficacité de l'installation de pompe à chaleur pour un coefficient dit de performance saisonnier, des points de fonctionnement prédéfinis sont prévus, lesquels se rapportent respectivement à une combinaison prédéterminée de valeurs à partir de la température de source de chaleur et de la température aller du circuit de chauffage et/ou de refroidissement raccordé,
des mesures aux points de fonctionnement étant effectuées pour la détermination du coefficient de performance saisonnier de l'installation de pompe à chaleur et/ou d'une valeur de coefficient de performance de l'installation de pompe à chaleur,
le coefficient de performance saisonnier et/ou la valeur de coefficient de performance étant déterminés et affichés en continu à partir des résultats de ces mesures individuelles, de manière instantanée et/ou à partir de périodes qui se sont déjà écoulées.

2. Procédé selon la revendication 1,
**caractérisé en ce que** pour la détermination du coefficient de performance saisonnier et/ou de la valeur de coefficient de performance, des mesures sont effectuées à des points de fonctionnement pouvant être prédéfinis, lesquels se rapportent respectivement à une combinaison prédéterminée de valeurs à partir de la température de source de chaleur et de la température aller du circuit de chauffage et/ou de refroidissement raccordé, lorsque la température de source de chaleur à l'état de fonctionnement actuel présente la valeur prédéterminée.

3. Procédé selon l'une des revendications 1 et 2,
**caractérisé en ce que** pour effectuer la mesure dans le cas d'une température de source de chaleur dans l'état de fonctionnement actuel à une valeur prédéterminée appropriée, le dispositif de régulation adapte au moins pendant une période courte pouvant être prédéfinie également la température aller du circuit de chauffage et/ou de refroidissement raccordé à une valeur de consigne pour la température aller prédéterminée correspondant à la combinaison de valeurs et à l'issue de la mesure la ramène à nouveau à une température aller appropriée à l'état de fonctionnement actuel.

4. Procédé selon l'une des revendications 1 à 3,
**caractérisé en ce que** dans le cas de la mesure pour la détermination du coefficient de performance saisonnier et/ou de la valeur de coefficient de performance à des points de fonctionnement pouvant être prédéfinis, la période pour l'adaptation de la température aller du circuit de chauffage et/ou de refroidissement raccordé pour effectuer la mesure peut être prédéfinie et/ou est déterminée automatiquement à partir de valeurs de fonctionnement actuelles.

5. Procédé selon l'une des revendications 1 à 4,
**caractérisé en ce que** l'intervalle de temps entre la dernière mesure pour la détermination du coefficient de performance saisonnier et/ou de la valeur de coefficient de performance à un point de fonctionnement peut être prédéfini.

6. Procédé selon l'une des revendications 1 à 5,
**caractérisé en ce que** la température de source de chaleur est mesurée directement ou indirectement, des états de fonctionnement actuels pouvant être détectés par le biais de capteurs de pression dans le circuit de réfrigération pour la mesure indirecte.

7. Procédé selon l'une des revendications 1 à 6,
**caractérisé en ce qu'**un coefficient de performance saisonnier de consigne et/ou une valeur de coefficient de performance de consigne peuvent être prédéfinis et **en ce que** le dispositif de régulation optimise les paramètres de l'installation de pompe à chaleur de telle sorte que ceux-ci sont atteints par le fonctionnement de l'installation de pompe à chaleur pendant une période pouvant être prédéfinie.

8. Procédé selon la question 7,
**caractérisé en ce que** le dispositif de régulation commence l'optimisation pour l'obtention du coefficient de performance saisonnier de consigne et/ou de la valeur de coefficient de performance de consigne avec des paramètres prédéfinis en usine et/ou lors de l'installation et modifie ceux-ci par comparaison avec des valeurs de fonctionnement mesurées actuellement.

9. Procédé selon l'une des revendications 1 à 8,
**caractérisé en ce que** le dispositif de régulation détermine les proportions des paramètres prédéfinis en usine et/ou lors de l'installation par comparaison avec les paramètres modifiés sur la base de valeurs de fonctionnement mesurées, les évalue et les affiche comme proportion des paramètres se basant sur des valeurs de mesure actuelles.

10. Procédé selon l'une des revendications 1 à 9,
**caractérisé en ce qu'**en cas de modification de paramètres d'une prévision de coefficient de performance saisonnier et/ou de valeur de coefficient de performance, des valeurs de fonctionnement sont déterminées à partir des valeurs de mesure existant actuellement et/ou des valeurs de fonctionnement déjà détectées pendant des périodes précédentes et sont affichées.

11. Procédé selon l'une des revendications 8 à 10,
**caractérisé en ce que** la prévision de coefficient de performance saisonnier et/ou de valeur de coefficient de performance est affichée avec une évaluation de qualité par rapport au dépassement du coefficient de performance saisonnier de consigne et/ou de la valeur de coefficient de performance de consigne ou au passage en dessous de celles-ci à la valeur du dépassement ou du passage en dessous.

12. Procédé selon l'une des revendications 8 à 11,
**caractérisé en ce que** l'obtention, le dépassement et/ou le passage en dessous d'un coefficient de performance saisonnier de consigne et/ou de la valeur de coefficient de performance de consigne sont déterminés et affichés.

13. Procédé selon l'une des revendications 1 à 12,
**caractérisé en ce que** des indications d'entretien sont délivrées lorsque par les mesures pour la détermination du coefficient de performance saisonnier et/ou de la valeur de coefficient de performance à des points de fonctionnement pouvant être prédéfinis on détecte des besoins d'optimisation de composants.
